(19)

Europäisches Patentamt

European Patent Office

Office européen des brevets

(11)     **EP 4 528 906 A1**

(12)     **EUROPEAN PATENT APPLICATION**
published in accordance with Art. 153(4) EPC

(43) Date of publication:
  **26.03.2025  Bulletin 2025/13**

(21) Application number: **24792912.8**

(22) Date of filing: **08.04.2024**

(51) International Patent Classification (IPC):
  *H01M 50/46* (2021.01)       *H01M 50/423* (2021.01)
  *H01M 50/42* (2021.01)       *H01M 50/446* (2021.01)
  *H01M 50/449* (2021.01)       *H01M 50/426* (2021.01)
  *H01M 50/443* (2021.01)       *H01M 4/134* (2010.01)
  *H01M 4/48* (2010.01)       *H01M 10/052* (2010.01)

(52) Cooperative Patent Classification (CPC):
  Y02E 60/10

(86) International application number:
  **PCT/KR2024/004597**

(87) International publication number:
  **WO 2024/219726 (24.10.2024 Gazette 2024/43)**

(84) Designated Contracting States:
  **AL AT BE BG CH CY CZ DE DK EE ES FI FR GB
  GR HR HU IE IS IT LI LT LU LV MC ME MK MT NL
  NO PL PT RO RS SE SI SK SM TR**
  Designated Extension States:
  **BA**
  Designated Validation States:
  **GE KH MA MD TN**

(30) Priority:  **21.04.2023  KR 20230052786**

(71) Applicant: **LG Energy Solution, Ltd.**
  **Seoul 07335 (KR)**

(72) Inventors:
  • **SHIN, Jin Young**
    **Daejeon 34122 (KR)**

• **JEONG, So Mi**
  **Daejeon 34122 (KR)**
• **SUNG, In Hyouk**
  **Daejeon 34122 (KR)**
• **BAE, Won Sik**
  **Daejeon 34122 (KR)**
• **KIM, Ji Hyeon**
  **Daejeon 34122 (KR)**
• **KIM, Ji Yeon**
  **Daejeon 34122 (KR)**

(74) Representative: **Hoffmann Eitle**
  **Patent- und Rechtsanwälte PartmbB
  Arabellastraße 30
  81925 München (DE)**

(54)     **SEPARATOR FOR ELECTROCHEMICAL DEVICE AND ELECTROCHEMICAL DEVICE INCLUDING SAME**

(57)     The present disclosure relates to a separator for an electrochemical device and an electrochemical device including the same, and more specifically, to a separator for an electrochemical device and an electrochemical device including the same, in which an adhesive layer is provided to face a silicon-based negative electrode and the silicon-based negative electrode and the adhesive layer each include polyacrylamide (PAM)-based binder, and thus an adhesive strength with the silicon-based negative electrode can be increased, and the swelling of the electrochemical device to which the silicon-based negative electrode is applied can be suppressed to increase the stability of the electrochemical device.

FIG. 1

100

— 150
— 130
— 110

EP 4 528 906 A1

**Description**

**[Technical Field]**

The present disclosure claims priority to Korean Patent Application No. 10-2023-0052786, filed on April 21, 2023, with Korean Patent Office, the disclosure of which is incorporated by reference herein in its entirety.

The present disclosure relates to a separator for an electrochemical device and an electrochemical device including the same, and more specifically, to a separator for an electrochemical device and an electrochemical device including the same, in which an adhesive layer is provided to face a silicon-based negative electrode and the silicon-based negative electrode and the adhesive layer each include polyacrylamide (PAM)-based binder, and thus an adhesive strength with the silicon-based negative electrode can be increased, and the swelling of the electrochemical device to which the silicon-based negative electrode is applied can be suppressed to improve the stability of the electrochemical device.

**[Background Art]**

Among components of an electrochemical device, a separator includes a polymer base having a porous structure, which is located between a positive electrode and a negative electrode and serves to isolate the positive electrode and the negative electrode, prevent electrical short between the two electrodes, and allow electrolyte and ions to pass therethrough. The separator itself does not participate in the electrochemical reaction, but physical properties, such as wettability to an electrolyte solution, the degree of porosity, and a thermal contraction rate, affect the performance and safety of the electrochemical device.

Therefore, to reinforce the physical properties of the separator, various methods for adding a coating layer to a porous polymer substrate and changing the physical properties of the coating layer by adding various materials to the coating layer have been attempted. For example, an inorganic material may be added to the coating layer to increase the mechanical strength of the separator, or an inorganic material or hydrate may be added to the coating layer to improve the flame retardancy and heat resistance of a polymer base.

The separator may be bonded to an electrode through a lamination process, and to secure an adhesive strength between the electrode and the separator, a binder resin may be added to a coating layer composition of the separator.

Meanwhile, among the negative electrode active materials used in the negative electrode of the electrochemical device, silicon-based active materials are attracting attention for having a capacity about 10 times higher than that of carbon-based active materials, and a high energy density can be implemented even with thin electrodes due to the high capacity. However, there has been a problem that the volumes of silicon-based active materials expand due to charging and discharging, resulting in degradation of lifetime characteristics.

Therefore, there has been a need for research on a separator in which the adhesive strength with the silicon-based negative electrode can be increased, and the stability of the electrochemical device can be improved by suppressing the swelling of the electrochemical device to which the silicon-based negative electrode is applied.

**[Summary of Invention]**

**[Technical Problem]**

The present disclosure is directed to providing a separator for an electrochemical device and an electrochemical device including the same, in which an adhesive layer is provided to face a silicon-based negative electrode and the silicon-based negative electrode and the adhesive layer each include polyacrylamide (PAM)-based binder, and thus an adhesive strength with the silicon-based negative electrode can be increased, and the swelling of the electrochemical device to which the silicon-based negative electrode is applied can be suppressed to improve the stability of the electrochemical device.

However, the object of the present disclosure is not limited to the above-described object, and other objects that are not mentioned will be able to be clearly understood by those skilled in the art from the following description.

**[Solution to Problem]**

One embodiment of the present disclosure provides a separator for an electrochemical device including an adhesive layer provided to face a silicon-based negative electrode, in which the silicon-based negative electrode includes a silicon-based negative active material and a first polymer binder, the adhesive layer includes a second polymer binder, and each of the first polymer binder and the second polymer binder are polyacrylamide (PAM)-based binder.

According to one embodiment of the present disclosure, the content of the first polymer binder may be 12 parts by weight or less with respect to 100 parts by weight of the silicon-based negative electrode.

According to one embodiment of the present disclosure, the content of the second polymer binder may be 50 parts by weight or less with respect to 100 parts by weight of the adhesive layer.

According to one embodiment of the present disclosure, the silicon-based negative active material may be one or more selected from the group consisting of Si, $SiO_x$ (0<x<2), a Si-Y alloy, and a Si-C composite, and Y is an alkali metal, an alkaline earth metal, a Group 13 element, a Group 14 element, a transition metal, a rare earth element, or combinations thereof, and may not be Si.

According to one embodiment of the present disclosure, the separator may include a porous polymer base, a coating layer provided on at least one surface of the porous polymer base, and an adhesive layer provided between the silicon-based negative electrode and the coating layer.

According to one embodiment of the present disclosure, the coating layer may include inorganic particles and a third polymer binder.

According to one embodiment of the present disclosure, an average particle diameter D50 of the inorganic particles may be in the range of 0.3 $\mu$m or more and 1.0 $\mu$m or less.

According to one embodiment of the present disclosure, the third polymer binder may be an acrylic-based binder, a polyvinylidene-based binder, or a combination thereof.

According to one embodiment of the present disclosure, the dry adhesive strength of the adhesive layer may be 50 gf/25 mm or more.

According to one embodiment of the present disclosure, the wet adhesive strength of the adhesive layer may be in the range of 10 gf/25 mm or more and 30 gf/25 mm or less.

One embodiment of the present disclosure provides an electrochemical device including a positive electrode, a silicon-based negative electrode, and the separator interposed between the positive electrode and the silicon-based negative electrode.

**[Advantageous Effects]**

According to the separator for an electrochemical device according to one embodiment of the present disclosure, it is possible to increase the adhesive strength with the silicon-based negative electrode.

According to the separator for an electrochemical device according to one embodiment of the present disclosure, it is possible to suppress the swelling of the electrochemical device to which the silicon-based negative electrode is applied, thereby improving the stability of the electrochemical device.

**[Brief Description of Drawings]**

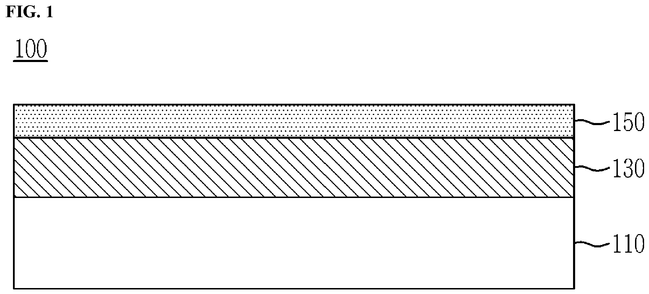

FIG. 1 is a schematic view of a separator for an electrochemical device according to one embodiment of the present disclosure.

**[Description of Embodiments]**

In the present specification, when a certain portion is described as "including" a certain element, it means that the certain portion may further include other elements rather than precluding other elements unless specifically stated to the contrary.

In the present specification, the term "A and/or B" means "A and B, or A or B."

In the present specification, when a certain component is described as being provided "on" one component, unless specifically stated to the contrary, it means that other components may be further disposed rather than precluding other components from being disposed therebetween.

In the present specification, the characteristic of "having pores" means that an object includes a plurality of pores and a gaseous and/or liquid fluid may pass through the pores from one side surface to the other side surface of the object by the structure in which the pores are interconnected.

In the present specification, "separator" has porous properties including a large number of pores and serves as a porous ion-conducting barrier that allows ions to pass therethrough while blocking electrical contact between the negative electrode and the positive electrode in the electrochemical device.

Hereinafter, the present disclosure will be described in more detail.

One embodiment of the present disclosure provides a separator for an electrochemical device including an adhesive layer provided to face a silicon-based negative electrode, in which the silicon-based negative electrode includes a silicon-based negative active material and a first polymer binder, the adhesive layer includes a second polymer binder, and the first polymer binder and the second polymer binder are polyacrylamide (PAM)-based binder.

According to the separator for an electrochemical device according to one embodiment of the present disclosure, it is possible to increase the adhesive strength with the silicon-based negative electrode. In addition, according to the separator for an electrochemical device according to one embodiment of the present disclosure, it is possible to suppress the swelling of the electrochemical device to which the silicon-based negative electrode is applied, thereby improving the stability of the electrochemical device.

FIG. 1 is a schematic view of a separator for an electrochemical device according to one embodiment of the present disclosure. Referring to FIG. 1, a separator 100 for an electrochemical device, which is one embodiment of the present disclosure, will be described in detail.

According to one embodiment of the present disclosure, the electrochemical device includes a silicon-based negative electrode. Among negative electrode active materials used in the negative electrode of the electrochemical device, the silicon-based active material has a capacity about 10 times higher than that of a carbon-based active material and thus has an advantage that it is possible to implement a high energy density even with a thin electrode due to the high capacity. However, since the silicon-based active material has a volume expansion problem due to charging and discharging, the present disclosure was designed to solve such a problem.

According to one embodiment of the present disclosure, the separator 100 for an electrochemical device includes an adhesive layer 150 provided to face the silicon-based negative electrode. Specifically, the adhesive layer 150 may be bonded to the silicon-based negative electrode or located between the silicon-based negative electrode and a coating layer 130 of the separator or a porous polymer base 110. As described above, since the separator for an electrochemical device may include the adhesive layer provided to face the silicon-based negative electrode, it is possible to increase the adhesive strength with the silicon-based negative electrode and suppress the swelling of the electrochemical device to which the silicon-based negative electrode is applied, thereby improving the stability of the electrochemical device.

According to one embodiment of the present disclosure, the silicon-based negative electrode includes a silicon-based negative electrode active material and a first polymer binder. As described above, since the silicon-based negative electrode includes the silicon-based negative electrode active material and the first polymer binder, it is possible to increase an electrode adhesive strength while sufficiently minimizing volume expansion and/or shrinkage of the silicon-based negative electrode active material.

According to one embodiment of the present disclosure, the silicon-based negative electrode includes the silicon-based negative electrode active material. Specifically, the silicon-based negative electrode may include a silicon-based compound as the silicon-based negative electrode active material. Non-limiting examples of the silicon-based compound may include Si, $SiO_x$ (0<x<2), Si-Y (Y is an alkali metal, an alkaline earth metal, a Group 13 element, a Group 14 element, a transition metal, a rare earth element, or combinations thereof and is not Si) alloy and a Si-C composite and include one or two or more among them.

According to one embodiment of the present disclosure, the silicon-based negative electrode includes the first polymer binder. As described above, since the silicon-based negative electrode includes the first polymer binder, it is possible to increase the adhesive strength with the separator through interaction with the second polymer binder included in the adhesive layer.

According to one embodiment of the present disclosure, the adhesive layer 150 includes a second polymer binder. As described above, when the adhesive layer includes the second polymer binder, it is possible to increase the adhesive strength with the silicon-based negative electrode through interaction with the first polymer binder.

According to one embodiment of the present disclosure, each of the first polymer binder and the second polymer binder is a polyacrylamide (PAM)-based binder. Specifically, the polyacrylamide (PAM)-based binder may be derived from one or more monomers selected from the group consisting of acrylamide, n-methylol acrylamide, n-butoxy methylacrylamide, methacrylamide, n-methylol methacrylamide, and n-butoxy methylmethacrylamide. By using the polyacrylamide (PAM)-based binder as the first polymer binder and the second polymer binder, it is possible to increase the adhesive strength with stronger stress by hydrogen bonding or covalent bonding between the silicon-based negative electrode and the adhesive layer and sufficiently minimize volume expansion and/or shrinkage of the silicon-based negative electrode active material.

According to one embodiment of the present disclosure, each of the first polymer binder and the second polymer binder may further include an aqueous-based binder. More specifically, the aqueous-based binder may include one selected from the group consisting of polyacrylic acid (PAA), polyvinyl alcohol (PVA), polyacrylonitrile (PAN), and copolymers thereof. As described above, since each of the first polymer binder and the second polymer binder further includes the aqueous-based binder, it is possible to increase the adhesive strength with the stronger stress by hydrogen bonding or covalent bonding between the silicon-based negative electrode and the adhesive layer.

According to one embodiment of the present disclosure, the content of the first polymer binder may be 12 parts by weight or less with respect to 100 parts by weight of the silicon-based negative electrode. Specifically, the content of the first polymer binder may be 7 parts by weight or more and 12 parts by weight or less, 7.5 parts by weight or more and 11.5 parts by weight or less, 8 parts by weight or more and 11 parts by weight or less, and 8.5 parts by weight or more and 10.5 parts by weight or less, and 9 parts by weight or more and 10 parts by weight or less with respect to 100 parts by weight of the silicon-based negative electrode. By adjusting the content of the first polymer binder within the above-described range, it is possible to increase electrode adhesive strength while sufficiently minimizing the volume expansion and/or shrinkage of the silicon-based negative electrode active material.

According to one embodiment of the present disclosure, the content of the second polymer binder may be 50 parts by weight or less with respect to 100 parts by weight of the adhesive layer. Specifically, the content of the second polymer binder may be 40 parts by weight or more and 50 parts by weight or less, 41 parts by weight or more and 49 parts by weight or less, 42 parts by weight or more and 48 parts by weight or less, 43 parts by weight or more and 47 parts by weight or less, or 44 parts by weight or more and 46 parts by weight or less with respect to 100 parts by weight of the adhesive layer. By adjusting the content of the second polymer binder within the above-described range, it is possible to increase the adhesive strength with the silicon-based negative electrode.

According to one embodiment of the present disclosure, the silicon-based negative active material may be one or more selected from the group consisting of Si, $SiO_x$ (0<x<2), a Si-Y alloy, and a Si-C composite, and Y is an alkali metal, an alkaline earth metal, a Group 13 element, a Group 14 element, a transition metal, a rare earth element, or combinations thereof, and may not be Si. Specifically, when the silicon-based negative electrode active material is included in the negative electrode, it is possible to increase an energy density and quick charging performance.

According to one embodiment of the present disclosure, the separator 100 for an electrochemical device may include the porous polymer base 110, the coating layer 130 provided on at least one surface of the porous polymer base, and the adhesive layer 150 provided between the silicon-based negative electrode and the coating layer. As described above, since the separator for an electrochemical device may include the porous polymer and the coating layer to allow lithium ions to pass therethrough while blocking electrical contact, it is possible to improve heat resistance and mechanical properties. In addition, since the separator for an electrochemical device may include the adhesive layer provided between the silicon-based negative electrode and the coating layer, it is possible to increase the adhesive strength with the silicon-based negative electrode.

According to one embodiment of the present disclosure, the separator 100 for an electrochemical device may include the porous polymer base 110 and the adhesive layer 150 provided between the silicon-based negative electrode and the porous polymer base. Specifically, when the coating layer is not provided or the coating layer is provided only on one surface of the porous polymer base, as described above, by including the porous polymer base and the adhesive layer provided between the silicon-based negative electrode and the porous polymer base, and thus it is possible to increase the adhesive strength with the silicon-based negative electrode.

According to one embodiment of the present disclosure, the separator 100 for an electrochemical device may include the porous polymer base 110. As described above, since the separator for the electrochemical device includes the porous polymer base to allow lithium ions to pass therethrough while blocking electrical contact, it is possible to implement a shutdown function at an appropriate temperature.

According to one embodiment of the present disclosure, the porous polymer base may include a polyolefin-based resin. Specifically, the porous polymer base may be manufactured using the polyolefin-based resin as a base resin. More specifically, examples of the polyolefin-based resin may include polyethylene, polypropylene, polypentene, etc. and include one or more among them. The separator having porosity, that is, a large number of pores, manufactured using such a polyolefin-based resin as the base resin may provide the shutdown function at the appropriate temperature.

According to one embodiment of the present disclosure, a weight average molecular weight of the polyolefin-based resin may be in the range of 500,000 or more and 1.5 million or less. By adjusting the weight average molecular weight of the polyolefin-based resin within the above-described range, it is possible to improve the compression resistance of the separator. Furthermore, upon using a mixture of different polyolefin-based resins or forming a separator with a multilayered structure made of different polyolefin-based resins, the weight average molecular weight of the polyolefin-based resin may be calculated by adding the weight average molecular weight according to a content ratio of each polyolefin-based resin.

In the present specification, "weight average molecular weight (Mw)" may be measured using gel permeation chromatography (PL GPC220, Agilent Technologies), and measurement conditions may be set as follows.

- Column: PL Olexis (from Polymer Laboratories)
- Solvent: Trichlorobenzene (TCB)
- Flow velocity 1.0 ml/min
- Sample concentration 1.0 mg/ml
- Injection amount 200 $\mu\ell$
- Column temperature 160°C
- Detector: Agilent high temperature RI detector
- Standard: Polystyrene (calibrated by tertiary function)

According to one embodiment of the present disclosure, the porous polymer base may be manufactured by a dry method or a wet method. Specifically, the porous polymer base may be manufactured by stretching a film made of the polyolefin-based resin in one direction and then stretching the stretched film in a direction perpendicular to the one direction (dry method). Alternatively, the porous polymer base may be manufactured by a method of mixing the polyolefin-based resin with diluents at a high temperature to form a single phase, in the cooling process, phase-separating the polymer material and the diluents and then extracting the diluents to form pores, and then performing stretching and heat setting (wet method).

According to one embodiment of the present disclosure, the average size and maximum pore size of the porous polymer base can be easily adjusted to be included in the scope of the present disclosure by adjusting the mixing ratio of the diluents, a stretching ratio, a heat setting treatment temperature, etc.

According to one embodiment of the present disclosure, the separator 100 for an electrochemical device may include the coating layer 130 provided on at least one surface of the porous polymer base 110. Specifically, the separator for an electrochemical device includes the coating layer provided on one surface or both surfaces of the porous polymer base. As described above, since the separator for an electrochemical device may include the coating layer provided on at least one surface of the porous polymer base, it is possible to improve the heat resistance and mechanical properties of the separator and prevent the occurrence of electrical short of the electrode by shrinking the separator at a high temperature.

According to one embodiment of the present disclosure, the coating layer may include inorganic particles and a third polymer binder. As described above, since the coating layer includes the inorganic particles and the third polymer binder, it is possible to improve the heat resistance and mechanical properties of the separator and prevent the occurrence of electrical short of the electrode by shrinking the separator at a high temperature.

According to one embodiment of the present disclosure, the content of the third polymer binder in the coating layer may be 10 parts by weight or less. Specifically, the content of the third polymer binder may be more than 0 parts by weight and 10 parts by weight or less, 1 parts by weight or more and 9 parts by weight or less, 2 parts by weight or more and 8 parts by weight or less, and 3 parts by weight or more and 7 parts by weight or less, or 4 parts by weight or more and 6 parts by weight or less with respect to 100 parts by weight of the coating layer. By adjusting the content of the third polymer binder within the above-described range to maintain the porosity of the separator, it is possible to maintain the adhesive strength even when the coating layer is wet by the electrolyte solution after activation of a battery.

According to one embodiment of the present disclosure, the coating layer may include a plurality of pores. Specifically, the coating layer may be a porous coating layer. More specifically, the coating layer may be a porous coating layer including a plurality of pores therein. As described above, the coating layer includes the plurality of pores to allow lithium ions to pass through the pores and allow a current to flow therethrough while physically blocking the negative and positive electrodes.

According to one embodiment of the present disclosure, the inorganic particles are bound by the third polymer binder and integrated in the layer to form the coating layer. Pores inside the coating layer may result from an interstitial volume, which is an empty space between the inorganic particles.

According to one embodiment of the present disclosure, the coating layer may be formed to have the thickness of 1 $\mu$m to 20 $\mu$m at any one side of the porous polymer base, but is not particularly limited thereto. The thickness may be adjusted to an appropriate range by those skilled in the art in terms of heat resistance or electrical resistance.

In one embodiment of the present disclosure, the thicknesses of the polymer base, the coating layer, and/or the separator may be measured using a contact-type thickness gauge. For example, as the contact-type thickness gauge, VL-50S-B from Mitutoyo may be used.

According to one embodiment of the present disclosure, the inorganic particles usable in the coating layer are not particularly limited as long as they are electrochemically stable. That is, the inorganic particles that may be used in one embodiment of the present disclosure are not particularly limited thereto as long as oxidation and/or reduction reactions do not occur in an operating voltage range (e.g., 0 V to 5 V on a Li/Li+ basis).

According to one embodiment of the present disclosure, non-limiting examples of the inorganic particles may include $BaTiO_3$, $Pb(Zr,Ti)O_3$(PZT), $Pb_{1-x}La_xZr_{1-y}Ti_yO_3$ (PLZT, 0<x<1, 0<y<1), $Pb(Mg_{1/3}Nb_{2/3})O_3$-$PbTiO_3$(PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, SiC, $Al(OH)_3$, $TiO_2$, aluminum peroxide, zinc tin hydroxide ($ZnSn(OH)_6$), tin-zinc oxide ($Zn_2SnO_4$, $ZnSnO_3$), antimony trioxide ($Sb_2O_3$), antimony tetroxide ($Sb_2O_4$), antimony pentoxide ($Sb_2O_5$), zeolite-based compounds, etc. and may include one or two or more among them.

According to one embodiment of the present disclosure, an average particle diameter D50 of the inorganic particles may be in the range of 0.3 $\mu$m or more and 1.0 $\mu$m or less. Specifically, the average particle diameter D50 of the inorganic particles may be in the range of 0.4 $\mu$m or more and 0.9 $\mu$m or less, 0.5 $\mu$m or more and 0.8 $\mu$m or less, or 0.6 $\mu$m or more and 0.7 $\mu$m or less. By adjusting the average particle diameter D50 of the inorganic particles in the above-described range, it is possible to increase the phase separation rate and phase separation efficiency between the third polymer binder particles and the inorganic particles in the slurry for the coating layer, which is an emulsion containing the third polymer binder particles dispersed in water. Furthermore, when the average particle diameter D50 of the inorganic particles is smaller than 0.3 $\mu$m, it is possible to reduce the dispersibility of the inorganic particles in the slurry for the coating layer, which is a slurry provided for manufacturing the coating layer, and when the average particle diameter D50 of the inorganic particles exceeds 1 μm, it is possible to increase the thickness of the coating layer to be formed.

In the present specification, "particle diameter D50" indicates the particle diameter at a 50% point of the cumulative distribution of particle numbers according to the particle diameter. The particle diameter may be measured using a laser diffraction method. Specifically, the powder to be measured is dispersed in a dispersion medium, and then is introduced into a commercially available laser diffraction particle diameter measuring device (e.g., Microtrac S3500) to measure a difference in diffraction patterns according to particle sizes when the particles pass through the laser beam, and thus the particle diameter is calculated. The particle diameter D50 may be measured by calculating the particle diameter at a point at which the cumulative distribution of particle numbers according to the particle diameter in the measuring device is 50%.

According to one embodiment of the present disclosure, the third polymer binder in the coating layer may be particulate or non-particulate. Specifically, as will be described below, the third polymer binder may maintain the particle shape without being dissolved by the dispersion medium or solvent, and the third polymer binder may be dissolved in the dispersion medium or solvent and may not maintain the particle shape. As described above, the mechanical properties and porosity of the coating layer may be adjusted by selecting the particulate or non-particulate third polymer binder.

According to one embodiment of the present disclosure, the average particle diameter D50 of the third particulate polymer binder is 1.0 μm or less. Specifically, the average particle diameter D50 of the third particulate polymer binder may be in the range of 0.10 μm or more and 0.90 μm or less, 0.15 μm or more and 0.85 μm or less, 0.20 μm or more and 0.70 μm or less, 0.25 μm or more and 0.65 μm or less, or 0.30 μm or more and 0.50 μm or less. By adjusting the average particle diameter D50 of the inorganic particles in the above-described range, it is possible to increase the phase separation rate and phase separation efficiency between the particulate third polymer binder and the inorganic particles in the slurry for the coating layer, which is an emulsion containing the third particulate polymer binder dispersed in water.

According to one embodiment of the present disclosure, the third polymer binder may include one or more polymer binders. As described above, since the third polymer binder includes one or more polymer binders, it is possible to increase the adhesive strength of the coating layer, improve the porosity of the coating layer, and simultaneously increase the dry adhesive strength before the electrolyte solution is injected and the wet adhesive strength after the electrolyte solution is injected.

According to one embodiment of the present disclosure, the third polymer binder may be an acrylic-based binder, a polyvinylidene-based binder, or a combination thereof. As described above, by using the acrylic-based binder, the polyvinylidene-based binder, or a combination thereof as the third polymer binder, it is possible to maintain the porosity of the separator and maintain the adhesive strength even when the coating layer is wet by the electrolyte solution after activation of the battery.

According to one embodiment of the present disclosure, the third polymer binder may be the acrylic-based binder. By using the acrylic-based binder as the third polymer binder, it is possible to maintain the porosity of the separator, increase the adhesive strength between the electrode and the separator in the battery lamination process to easily manufacture the battery, and stably implement the stacking process.

According to one embodiment of the present disclosure, the acrylic-based binder may be a polymer containing carboxylic acid ester as a repeating unit and may preferably be (meth)acrylic acid ester or acrylic-styrene copolymer.

According to one embodiment of the present disclosure, specific examples of the (meth)acrylic acid ester may include methyl(meth)acrylate, ethyl(meth)acrylate, n-propyl(meth)acrylate, i-propyl(meth)acrylate, n-butyl(meth)acrylate, i-butyl(meth)acrylate, n-amyl(meth)acrylate, i-amyl(meth)acrylate, hexyl(meth)acrylate, cyclohexyl(meth)acrylate, 2-ethylhexyl(meth)acrylate, n-octyl(meth)acrylate, nonyl(meth)acrylate, decyl(meth)acrylate, hydroxymethyl(meth)acrylate, hydroxyethyl(meth)acrylate, ethylene glycol(meth)acrylate, ethylene glycol di(meth)acrylate, propylene glycol di(meth)acrylate, trimethylolpropane(meth)acrylate, pentaerythritol tetra(meth)acrylate, dipentaerythritol hexa(meth)acrylate, allyl(meth)acrylate, ethylene di(meth)acrylate, etc., and may be one or more selected from these. Among them, one or more selected from methyl(meth)acrylate, ethyl(meth)acrylate, and 2-ethylhexyl(meth)acrylate is preferable, and methyl(meth)acrylate is particularly preferable.

According to one embodiment of the present disclosure, the acrylic-styrene copolymer may include an acrylic-based binder, and the acrylic-based binder may be a polyacrylate-based binder. For example, the binder may be one or more selected from the group consisting of styrene-butadiene rubber, nitrile-butadiene rubber, acrylonitrile-butadiene rubber, acrylonitrile-butadiene-styrene rubber, and acrylate-based polymers and specifically, may be a copolymer containing acrylate.

According to one embodiment of the present disclosure, the third polymer binder may be the polyvinylidene-based binder. Specifically, according to one embodiment of the present disclosure, the polyvinylidene-based binder may be a copolymer of polyvinylidene fluoride and hexafluoropropylene. As described above, by selecting the binder resin to be a polyvinylidene-based binder, it is possible to maintain the adhesive strength even when the coating layer is wet by the electrolyte solution after activation of the battery. Furthermore, it is possible to increase the stiffness of the battery and prevent the bending of the separator.

According to one embodiment of the present disclosure, the polyvinylidene-based binder may be an aqueous-based binder. Specifically, by selecting the polyvinylidene-based binder as to be the aqueous binder, it is possible to minimize pollutants emitted during the manufacturing process of the separator, thereby reducing the manufacturing cost of the battery.

According to one embodiment of the present disclosure, the third polymer binder may be a polyvinylidene-based binder having 1 wt% or more and 50 wt% or less of the content of hexafluoropropylene. As described above, by selecting the third polymer binder to be a polyvinylidene-based binder having 1 wt% or more and 50 wt% or less of the content of hexafluoropropylene, it is possible to maintain the porosity of the separator and maintain the adhesive strength even when the coating layer is wet by the electrolyte solution after activation of the battery.

According to one embodiment of the present disclosure, the porosity of the coating layer may be 30% or more by volume. Specifically, the porosity of the coating layer may be in the range of 30% by volume or more and 70% by volume or less, 32% by volume or more and 68% by volume or less, 34% by volume or more and 66% by volume or less, 36% by volume or more and 64% by volume or less, 38% by volume or more and 62% by volume or less, 40% by volume or more and 60% by volume or less, 42% by volume or more and 58% by volume or less, 44% by volume or more and 56% by volume or less, 46% by volume or more and 54% by volume or less, or 48% by volume or more and 52% by volume or less. By adjusting the porosity of the coating layer within the above-described range, it is possible to maintain the movement of ions in the separator and prevent an increase in resistance of the separator. Specifically, when the porosity is 70% by volume or less, it is possible to secure mechanical properties that may withstand the press process of bonding to the electrode, and a surface opening ratio is not too high, making it suitable for securing the adhesive strength. Meanwhile, when the porosity is 30% by volume or more, it is advantageous from the viewpoint of ion permeability.

In the present specification, "porosity" indicates a ratio of the volume of pores to the total volume, uses % by volume as a unit and may be used interchangeably with terms such as porosity and porosity.

In the present specification, the porosity corresponds to a value obtained by subtracting a volume calculated by a weight and density of each component of the coating layer from a volume calculated by a thickness, width, and length of the coating layer.

In one embodiment of the present disclosure, the porosity and pore size of the coating layer may be measured by a BET 6 point method using a scanning electron microscope (SEM) image, a mercury porosimeter, a capillary flow porometer, or a porosimetry analyzer (Bell Japan Inc, Belsorp-II mini). In this case, it may be advantageous to use the capillary flow porometer.

According to one embodiment of the present disclosure, the separator 100 for an electrochemical device may include the adhesive layer 150 provided between the silicon-based negative electrode and the coating layer 130. As described above, since the separator for an electrochemical device may include the adhesive layer provided between the silicon-based negative electrode and the coating layer, it is possible to increase the adhesive strength with the silicon-based negative electrode and suppress the swelling of the electrochemical device to which the silicon-based negative electrode is applied, thereby improving the stability of the electrochemical device.

According to one embodiment of the present disclosure, the adhesive layer includes a second polymer binder. The content of the second polymer binder in the adhesive layer may be 50 parts by weight or less. Specifically, the content of the second polymer binder may be 40 parts by weight or more and 50 parts by weight or less, 41 parts by weight or more and 49 parts by weight or less, 42 parts by weight or more and 48 parts by weight or less, 43 parts by weight or more and 47 parts by weight or less, or 44 parts by weight or more and 46 parts by weight or less with respect to 100 parts by weight of the adhesive layer. By adjusting the content of the second polymer binder within the above-described range, it is possible to increase the adhesive strength with the silicon-based negative electrode.

According to one embodiment of the present disclosure, the thickness of the adhesive layer may be in the range of 1 $\mu$m to 20 $\mu$m at the side in contact with the porous polymer substrate of the coating layer and the other side, but is not particularly limited thereto. The thickness may be adjusted to an appropriate range by those skilled in the art in terms of the adhesive strength to the electrode.

In one embodiment of the present disclosure, the thickness of the adhesive layer may be measured by using the contact-type thickness gauge. For example, as the contact-type thickness gauge, VL-50S-B from Mitutoyo may be used.

In the present specification, "wet adhesive strength" may indicate an adhesive strength in a state in which an electrolyte solution is injected into a battery. "Dry adhesive strength" indicates an adhesive strength in a state before the electrolyte is injected into the battery.

According to one embodiment of the present disclosure, the dry adhesive strength of the adhesive layer may be 50 gf/25 mm or more. Specifically, the dry adhesive strength of the adhesive layer may be in the range of 50 gf/25 mm or more and 150 gf/25 mm or less, 60 gf/25 mm or more and 140 gf/25 mm or less, 70 gf/25 mm or more and 130 gf/25 mm or less, 80 gf/25 mm or more and 120 gf/25 mm or less, or 90 gf/25 mm or more and 110 gf/25 mm or less. By adjusting the dry adhesive strength of the adhesive layer within the above-described range, it is possible to suppress the swelling of the electrochemical device to which the silicon-based negative electrode is applied, thereby improving the stability of the electrochemical device.

According to one embodiment of the present disclosure, the wet adhesive strength of the adhesive layer may be in the range of 10 gf/25 mm or more and 30 gf/25 mm or less. Specifically, the wet adhesive strength of the adhesive layer may be in the range of 12 gf/25 mm or more and 28 gf/25 mm or less, 14 gf/25 mm or more and 26 gf/25 mm or less, 16 gf/25 mm or more and 24 gf/25 mm or less, or 18 gf/25 mm or more and 22 gf/25 mm or less. By adjusting the wet adhesive strength of the adhesive layer within the above-described range, it is possible to suppress the swelling of the electrochemical device to which the silicon-based negative electrode is applied, thereby improving the stability of the electrochemical device.

One embodiment of the present disclosure provides a method of manufacturing a separator for an electrochemical device including mixing a slurry for a coating layer containing a third polymer binder and inorganic particles (S10), providing the coating layer by applying the slurry for a coating layer on at least one surface of a porous polymer base and drying the slurry (S30), mixing a slurry for an adhesive layer containing a second polymer binder (S50), and providing the adhesive layer by applying the slurry for the adhesive layer on one surface of the coating layer and drying the slurry (S70).

The method of manufacturing the separator for an electrochemical device according to one embodiment of the present disclosure can maintain an adhesive strength with an electrode during the lamination process and maintain the adhesive strength after activation of a battery to increase stiffness or prevent the bending of pouch-type cells.

According to one embodiment of the present disclosure, the method of manufacturing the separator for an electrochemical device includes mixing the slurry for a coating layer containing the third polymer binder and the inorganic particles (S10). As described above, by including the mixing of the slurry for a coating layer containing the third polymer binder and the inorganic particles (S10), the coating layer may be easily formed on the separator.

According to one embodiment of the present disclosure, the slurry for a coating layer may be provided by dispersing the third polymer binder in water, which is an appropriate dispersion medium, to manufacture a polymer emulsion. Alternatively, the slurry for a coating layer may be provided by dissolving the third polymer binder in water, which is an appropriate solvent, to manufacture a polymer solution. As described above, by providing the slurry for the coating layer by dispersing or dissolving the third polymer binder in an appropriate dispersion medium or solvent to manufacture a polymer emulsion or a polymer solution, it is possible to minimize contaminants generated during the manufacturing process.

According to one embodiment of the present disclosure, inorganic particles may be added and dispersed to the polymer emulsion or the polymer solution. A content ratio of the inorganic particles and the third polymer binder is about 95:5 and is appropriately adjusted in consideration of the thickness, pore size, and porosity of the final manufactured coating layer according to one embodiment of the present disclosure.

According to one embodiment of the present disclosure, the method of manufacturing the separator for an electrochemical device includes the providing of the coating layer by applying the slurry for a coating layer on at least one surface of the porous polymer base and drying the slurry (S30).

According to one embodiment of the present disclosure, the method of manufacturing the separator for an electrochemical device includes the applying of the slurry for a coating layer on at least one surface of the porous polymer base. As described above, by including the applying of the slurry for a coating layer on at least one surface of the porous polymer base, the coating layer may be formed with a single application, a portion of the slurry for a coating layer close to the porous polymer base contains an excessive amount of inorganic particles due to separation between the inorganic particles and the polymer binder particles, and a distant portion of the slurry for a coating layer facing the porous polymer base contains an excessive amount of the polymer binder particles. Therefore, it is possible to increase the adhesive strength with the adhesive layer and increase the porosity of the separator.

According to one embodiment of the present disclosure, the method of applying the slurry for a coating layer to the surface of the porous polymer base is not particularly limited to any one method, and typical methods known in the art may be used. For example, various methods such as dip coating, die coating, roll coating, comma coating, and combinations thereof may be used.

According to one embodiment of the present disclosure, the method of manufacturing the separator for an electrochemical device includes the providing of the coating layer by drying the slurry for a coating layer. As described above, by including the providing of the coating layer by drying the slurry for a coating layer, it is possible to minimize damage to the coating layer and easily remove the dispersion medium or solvent contained in the slurry.

According to one embodiment of the present disclosure, the drying process appropriately sets time conditions to minimize the occurrence of surface defects of the coating layer. For the drying, a drying auxiliary device such as a drying oven or hot air may be used within an appropriate range.

According to one embodiment of the present disclosure, the method of manufacturing the separator for an electrochemical device includes the mixing of the slurry for an adhesive layer containing the second polymer binder (S50). As described above, by including the mixing of the slurry for an adhesive layer containing the second polymer binder (S50), the adhesive layer may be easily formed on the separator.

According to one embodiment of the present disclosure, the slurry for an adhesive layer may be provided by dispersing the second polymer binder in water, which is an appropriate dispersion medium, to manufacture a polymer emulsion. Alternatively, the slurry for an adhesive layer may be provided by dissolving the second polymer binder in water, which is an appropriate solvent, to manufacture a polymer solution. As described above, by providing the slurry for the adhesive layer by dispersing or dissolving the second polymer binder in an appropriate dispersion medium or solvent to manufacture a polymer emulsion or a polymer solution, it is possible to minimize contaminants generated during the manufacturing process.

According to one embodiment of the present disclosure, other compositions may be added and dispersed to the polymer emulsion or the polymer solution. A content ratio of the second polymer binder and other compositions is 45:55, and is appropriately adjusted in consideration of the thickness and adhesive strength of the final manufactured adhesive layer according to one embodiment of the present disclosure.

According to one embodiment of the present disclosure, the method of manufacturing the separator for an electrochemical device includes the providing of the adhesive layer by applying the slurry for an adhesive layer on at least one surface of the coating layer and drying the slurry (S70).

According to one embodiment of the present disclosure, the method of manufacturing the separator for an electrochemical device includes the applying of the slurry for an adhesive layer on one surface of the coating layer. As described above, by including the applying of the slurry for an adhesive layer on the one surface of the coating layer, the adhesive layer can be formed with single application, and a portion of the slurry for an adhesive layer close to the coating layer among the slurry for an adhesive layer contains an excessive amount of other compositions containing an acrylic-based binder, and a distant portion of the slurry for an adhesive layer facing the coating layer contains an excessive amount of the second polymer binder, and thus it is possible to increase the adhesive strength with the silicon-based negative electrode.

According to one embodiment of the present disclosure, the method of applying the slurry for an adhesive layer to the surface of the coating layer is not particularly limited to any one method, and typical methods known in the art may be used. For example, various methods such as dip coating, die coating, roll coating, comma coating, and combinations thereof may be used.

According to one embodiment of the present disclosure, the method of manufacturing the separator for an electrochemical device includes the providing of the adhesive layer by drying the slurry for an adhesive layer. As described above, by including the providing of the adhesive layer by drying the slurry for an adhesive layer, it is possible to minimize damage to the adhesive layer and easily remove the dispersion medium or solvent contained in the slurry.

According to one embodiment of the present disclosure, the drying process appropriately sets time conditions to minimize the occurrence of surface defects of the adhesive layer. For the drying, a drying auxiliary device such as a drying oven or hot air may be used within an appropriate range.

According to one embodiment of the present disclosure, the separator 100 for an electrochemical device is manufactured as an electrochemical device by a lamination process in which the separator 100 for an electrochemical device is interposed between the silicon-based negative electrode and the positive electrode and bonded by applying heat and/or pressure. In one embodiment of the present disclosure, the lamination process may be performed by a roll press device including a pair of pressure rollers. That is, it is possible to achieve interlayer adhesion by sequentially stacking the silicon-based negative electrode, the separator, and the positive electrode and inserting the silicon-based negative electrode, the separator, and the silicon-based positive electrode between the pressure rollers. In this case, the lamination process may be performed by hot pressing.

One embodiment of the present disclosure provides an electrochemical device including a positive electrode, a silicon-based negative electrode, and a separator interposed between the positive electrode and the silicon-based negative electrode.

The electrochemical device according to one embodiment of the present disclosure can suppress volume expansion due to charging and discharging of the silicon-based active material and the degradation of lifetime characteristics accordingly, and improve stability.

In the present disclosure, the electrochemical device is a device for converting chemical energy into electrical energy through an electrochemical reaction and is a concept encompassing a primary battery and a secondary battery. In the present specification, the secondary battery is capable of charging and discharging and indicates a lithium secondary battery, a nickel-cadmium battery, a nickel-hydrogen battery, etc. The lithium secondary battery uses lithium ions as an ion conductor and may include, for example, a non-aqueous electrolyte secondary battery containing a liquid electrolyte, an all-solid-state battery containing a solid electrolyte, a lithium polymer battery containing a gel polymer electrolyte, a lithium metal battery using a lithium metal as a negative electrode, etc., but is not limited thereto.

According to one embodiment of the present disclosure, the adhesive layer included in the separator is provided on the silicon-based negative electrode. As described above, by providing the adhesive layer included in the separator on the silicon-based negative electrode, it is possible to suppress the volume expansion due to the charge and discharge of the silicon-based active material and the degradation of lifetime characteristics and improve stability.

According to one embodiment of the present disclosure, the positive electrode includes a positive electrode current collector and a positive electrode active material layer including a positive electrode active material, a conductive material, and a binder resin on at least one surface of the current collector. The positive electrode active material may be one or more among a layered compound such as lithium manganese composite oxide ($LiMn_2O_4$, $LiMnO_2$, etc.), lithium cobalt oxide ($LiCoO_2$), or lithium nickel oxide ($LiNiO_2$), or a compound substituted with one or more transition metals; lithium manganese oxide with Chemical Formula $Li_{1+x}Mn_{2-x}O_4$ (here, x is in the range of 0 to 0.33), such as $LiMnO_3$, $LiMn_2O_3$, $LiMnO_2$, etc.; lithium copper oxide ($Li_2CuO_2$); vanadium oxides such as $LiV_3O_8$, $LiV_3O_4$, $V_2O_5$, $Cu_2V_2O_7$; Ni site type lithium nickel oxide represented by Chemical Formula $LiNi_{1-x}M_xO_2$ (here, M=Co, Mn, Al, Cu, Fe, Mg, B or Ga and x=0.01 to 0.3); lithium manganese complex oxide represented by Chemical Formula $LiMn_{1-x}MxO_2$ (here, M=Co, Ni, Fe, Cr, Zn or Ta, and x=0.01 to 0.1) or $Li_2Mn_3MO_8$ (here, M=Fe, Co, Ni, Cu or Zn); $LiMn_2O_4$ in which a portion of Li in Chemical Formula is replaced with an alkaline earth metal ion; disulfide compounds; and $Fe_2(MoO_4)_3$.

According to one embodiment of the present disclosure, the negative electrode includes a negative electrode current collector and a negative electrode active material layer including a negative electrode active material, a conductive material, and a binder resin on at least one surface of the current collector. The negative electrode active material may include one or more silicon-based negative electrode active materials selected from the group consisting of Si, $SiO_x$ (0<x<2), a Si-Y alloy, and Si-C composite. Furthermore, the negative electrode may further include one or more compound selected from the group consisting of lithium metal oxide, carbon such as non-graphitizable carbon, and graphitic carbon; metal composite oxide such as $Li_xFe_2O_3$ (0≤x≤1), $Li_xWO_2$ (0≤x≤1), $Sn_xMe_{1-x}Me'_yO_z$ (Me, Mn, Fe, Pb, Ge; Me': Al, B, P, Si, elements of groups 1, 2, and 3 of the periodic table, halogen; 0<x≤1; 1≤y≤3; 1≤z≤8) and other metal complex oxides; a lithium metal; a lithium alloy; a silicon-based alloy; a tin-based alloy; metal oxides such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, and $Bi_2O_5$; a conductive polymer such as polyacetylene; Li-Co-Ni based materials; titanium oxide as the negative electrode active material.

According to one embodiment of the present disclosure, the conductive material may be any one or a mixture of two or more selected from the group consisting of graphite, carbon black, carbon fiber or metal fiber, metal powder, conductive whisker, conductive metal oxide, activated carbon, and polyphenylene derivative. More specifically, the conductive material may be one or a mixture of two or more selected from the group consisting of natural graphite, artificial graphite, super-p, acetylene black, Ketjen black, channel black, furnace black, lamp black, summer black, denka black, aluminum powder, nickel powder, oxidation zinc, potassium titanate, and titanium oxide.

According to one embodiment of the present disclosure, the current collector is not particularly limited as long as it has high conductivity without causing chemical changes in the battery, for example, stainless steel, copper, aluminum, nickel, titanium, calcined carbon, or the surface of aluminum or stainless steel treated with carbon, nickel, titanium, silver, etc., may be used.

According to one embodiment of the present disclosure, the negative electrode active material layer may further include a binder resin. As the binder resin, polymers commonly used in electrodes in the art may be used. Non-limiting examples of the binder resin further included in the negative electrode active material layer may include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, etc., but are not limited thereto.

According to one embodiment of the present disclosure, the binder resin included in the positive electrode active material layer may be a polymer commonly used in electrodes in the art. Non-limiting examples of the binder resin further included in the positive electrode active material layer may include polyvinylidene fluoride-co-hexafluoropropylene, polyvinylidene fluoride-cotrichloroethylene, polymethylmethacrylate, polyethylhexyl acrylate, polybutylacrylate, polyacrylonitrile, polyvinylpyrrolidone, polyvinyl acetate, polyethylene-co-vinyl acetate, polyethylene oxide, polyarylate, cellulose acetate, cellulose acetate butyrate, cellulose acetatepropionate, cyanoethylpullulan, cyanoethylpolyvinylalcohol, cyanoethylcellulose, cyanoethylsucrose, pullulan, carboxyl methyl cellulose, etc., but are not limited thereto.

According to one embodiment of the present disclosure, the positive electrode slurry for manufacturing the positive electrode active material layer may include a dispersant, and the dispersant may be a pyrrolidone-based compound. Specifically, the positive electrode slurry may be N-methylpyrrolidone (HPD-01, LG Chemical).

According to one embodiment of the present disclosure, the content of the dispersant contained in the positive electrode slurry may be more than 0 parts by weight and 0.5 parts by weight or less with respect to 100 parts by weight of the positive electrode slurry. Specifically, the content of the dispersant contained in the positive electrode slurry may be more than 0.05 parts by weight and 0.4 parts by weight or less with respect to 100 parts by weight of the positive electrode slurry.

According to one embodiment of the present disclosure, the negative electrode slurry for manufacturing the negative electrode active material layer may include a dispersant, and the dispersant may be a CMC dispersant (SWCNT, Ocsial, Tuball dispersion).

According to one embodiment of the present disclosure, the content of the dispersant contained in the negative electrode slurry may be in the range of more than 0 parts by weight and 1.0 parts by weight or less with respect to 100 parts by weight of the negative electrode slurry. Specifically, the content of the dispersant contained in the negative electrode slurry may be in the range of 0.1 part by weight or more and 0.9 parts by weight or less, 0.2 parts by weight or more and 0.8 parts by weight or less, 0.3 parts by weight or more and 0.7 parts by weight or less, or 0.4 parts by weight or more and 0.6 parts by weight or less with respect to 100 parts by weight of the negative electrode slurry.

According to one embodiment of the present disclosure, a battery may be manufactured by inserting the electrochemical device provided as described above into an appropriate case and injecting an electrolyte solution.

According to one embodiment of the present disclosure, the electrolyte solution is a salt of the same structure as $A^+B^-$, in which $A^+$ includes an ion consisting of an alkali metal cation such as $Li^+$, $Na^+$, $K^+$ or combinations thereof, and $B^-$ includes an ion consisting of anions such as $PF6^-$, $BF4^-$, $Cl^-$, $Br^-$, $I^-$, $ClO_4^-$, $AsF_6^-$, $CH_3CO_2^-$, $CF_3SO_3^-$, $N(CF_3SO_2)_2^-$, $C(CF_2SO_2)_3^-$ or combinations thereof are dissolved or dissociated in an organic solvent consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma butyrolactone ($\gamma$-butyrolactone), or mixtures thereof, but is not limited thereto.

One embodiment of the present disclosure provides a battery module including a battery including the electrochemical element as a unit cell, a battery pack including the battery module, and a device including the battery pack as a power source. Specific examples of the device include a power tool moved by power supplied by an omni-electric motor, electric vehicles including an electric vehicle (EV), a hybrid electric vehicle (HEV), a plug-in hybrid electric vehicle (PHEV), etc., an electric two-wheeled vehicle including an electric bicycle (E-bike) and an electric scooter (E-scooter), an electric golf cart, a power storage systems, etc., but are not limited thereto.

**[Modes for implementing the invention]**

Hereinafter, in order to specifically describe the present disclosure, the present disclosure will be described in detail through examples. However, the examples according to the present disclosure may be modified into various other forms, and the scope of the present disclosure should not be construed as being limited to the examples to be described below. The examples in the specification are provided to more completely describe the present disclosure to those skilled in the art.

<Example 1>

<Manufacture **of** separator>

A porous polymer base (total thickness of about 10 $\mu$m, porosity of 40% by volume) is provided.

A slurry for a coating layer (35 wt% of solid concentration) was provided by adding and dispersing, as a third particulate polymer binder, an acrylic binder having 150 nm of a particle diameter (Toyo, CSB-140, -25°C of a glass transition temperature), polyacrylic acid (PAA) dispersant (Dow chemical, CK-702), wetting agent (BYK, BYK-348), and inorganic particles ($Al_2O_3$, 500 nm of a particle diameter) to water. A weight ratio of the third polymer binder and the inorganic particle was 4.6:95.4.

A coating layer having the thickness of 1.5 $\mu$m was formed on each of both surfaces by applying the slurry for a coating layer on both surfaces of the porous polymer base by a bar coating method using a doctor blade and drying the slurry using the wind at 50°C using a heat gun.

A slurry (5 wt% of solid concentration) for an adhesive layer was provided by adding and dispersing a solution-type PAM-based binder (Miwon, SBS-04) that is the second polymer binder, styrene-butyl acrylate (LG Chemical, ADS-11, glass transition temperature 40°C) having 500 nm of the particle diameter, which is an acrylic-based binder, and a polyacrylic acid (PAA) dispersant (Dow chemical company, CK-702) to water. A weight ratio of the second polymer binder and particles of other compositions was 45:55.

A separator having the total thickness of 14 $\mu$m was manufactured by applying the slurry for an adhesive layer on both surfaces of the coating layer by the bar coating method using the doctor blade and drying the slurry using the wind at 50°C using a heat gun to form an adhesive layer having the thickness of 0.5 $\mu$m on both surfaces thereof.

<Manufacture of electrochemical device>

1) Manufacture of positive electrode

A slurry for a positive active material layer having the concentration of 76.5 wt% of the remaining component excluding NMP was provided by mixing a positive electrode active material ($LiNi_{0.8}Mn_{0.1}Co_{0.1}O_2$), a conductive material (LBCNT, BT1003M, LG Chemical), a dispersant (N-methylpyrrolidone, HPD-01, LG Chemical), and a PVDF binder resin (KF9700, Solvay) with NMP at the weight ratio of 97.5:0.7:0.14:1.66. Next, a positive electrode having 4.52 mAh/cm$^2$ of loading was manufactured by applying the slurry on a surface of an aluminum thin film (12 $\mu$m in thickness) and drying the slurry.

2) Manufacture of negative electrode

A slurry for a negative electrode active material having the concentration of 25 wt% of the remaining component excluding water by mixing silicon particles (Elkem, M702), PAM-based binder (Arakawa, BUH0452), a conductive material (Imerys, SFG-6L), a conductive material (SWCNT, Ocsial, Tuball dispersion), and a CMC dispersant (SWCNT, Ocsial, Tuball dispersion) with water at the weight ratio of 80:9.4:9.6:0.4:0.6. Next, a negative electrode having 8 mAh/cm$^2$ of negative electrode loading was manufactured by applying the slurry on a surface of a copper thin film (8 $\mu$m in thickness) and drying the slurry.

**<Comparative Example 1>**

**<Manufacture of separator>**

A separator was manufactured in the same manner as in Example 1.

**<Manufacture of electrochemical device>**

An electrochemical device was manufactured in the same manner as in Example 1, except that an SBR binder (LG Chemical, M37) was used instead of the PAM-based binder when the negative electrode in Example 1 was manufactured.

**<Comparative Example 2>**

**<Manufacture of separator>**

A separator was manufactured in the same manner as in Example 1, except that LBG-4430LX (Arkema, 250 mm of particle diameter) was used instead of the PAM-based binder in the adhesive layer.

**<Manufacture of electrochemical device>**

An electrochemical device was manufactured in the same manner as in Example 1.

**<Comparative Example 3>**

**<Manufacture of separator>**

A separator was manufactured in the same manner as in Example 1, except that LBG-4430LX (Arkema, 250 mm of particle diameter) was used instead of the PAM-based binder in the adhesive layer.

**<Manufacture of electrochemical device>**

An electrochemical device was manufactured in the same manner as in Example 1, except that an SBR binder (LG Chemical, M37) was used instead of the PAM-based binder when the negative electrode in Example 1 was manufactured.

**<Comparative Example 4>**

**<Manufacture of separator>**

A separator was manufactured in the same manner as in Example 1.

**<Manufacture of electrochemical device>**

In Example 1, a slurry for a negative electrode active material layer having the concentration of 50 wt% of the remaining component excluding water was provided by mixing graphite (artificial graphite/natural graphite blend, P20T/LSN-1, Zichen/BTR), SBR binder (LG Chemical, M37), conductive material (carbon black, Super-C65), and dispersant (CMC DAICEL 2200, DAICEL, Japan) with water at a weight ratio of 80.3/19.7:2.3:1.05:0.5. Next, an electrochemical device was manufactured in the same manner as in Example 1, except that the slurry is applied on the surface of the copper thin film (6 μm in thickness) and dried and the negative electrode having 5.5 mAh/cm² of negative electrode loading was manufactured. Specifically, unlike Example 1, the negative electrode was manufactured by using graphite as the negative electrode active material and using the SBR binder (LG Chemical Company, M37) rather than the PAM-based binder.

### <Experimental Example 1: air permeation of separator>

The air permeability indicates the time for 100 cc of air to permeate an object for which an air permeation time is measured, such as a separator and a porous polymer base, and second/100 cc may be used as a unit. The air permeability may be represented by a Gurely value, etc. In the present disclosure, the air permeability was measured based on JIS P8117.

### <Experimental Example 2: dry adhesive strength between negative electrode and separator>

Samples were manufactured by laminating the negative electrodes and separators in Example and Comparative Examples provided by cutting the separators of Example and Comparative Examples into 70 mm (length) x 25 mm (width) using a press under conditions of 60°C, 6.5 MPa, and 1 sec. The provided samples were fixedly attached to a glass plate using a double-sided tape, and in this case, the negative electrode was disposed to face the glass plate. The separator portion of the sample was peeled off at an angle of 180° at a rate of 150 mm/min at 25°C, and adhesive strengths of the negative electrodes of Example and Comparative Examples were measured.

### <Experimental Example 3: wet adhesive strength between negative electrode and separator>

Samples were manufactured by laminating the negative electrodes and separators in Example and Comparative Examples provided by cutting the separators of Example and Comparative Examples into 70 mm (length) x 25 mm (width) using a press under conditions of 60°C, 6.5 MPa, and 1 sec. The provided samples were added to the battery case together with the electrolyte solution and maintained for 4 hours to impregnate the samples with the electrolyte solution. The electrolyte solution mixing ethylene carbonate and ethylmethylate at a volume ratio of 7:3 and having 1 M of the concentration of $LiPF_6$ was used. Then, the samples were taken out of the case and fixedly attached to the glass plate using the double-sided tape, and in this case, the negative electrode was disposed to face the glass plate. The separator portion of the sample was peeled off at an angle of 90° at a rate of 200 mm/min at 25°C, and adhesive strengths of the negative electrodes of Example and Comparative Examples were measured.

### <Experimental Example 4: swelling degree of electrochemical device>

A 2Ah-class small full cell was manufactured by laminating the electrochemical devices of Example and Comparative Examples. The thickness of each cell manufactured as described above in the initial fully discharged state at 25°C was measured by using a vernier. Then, cycle evaluation was performed at 25°C, and the thickness of the cell was measured at 600 cycles to measure the change in cell thickness before and after the cycle. When the initial cell thickness was T1 and the cell thickness after 600 cycles was T2, the swelling degree of the electrochemical device was calculated according to Equation 1 below.

[Equation 1]

$$Swelling\ (\%) = (T2-T1)/T1*100$$

[Table 1]

|  | Thickness (μm) | Air permeability (sec/100cc) | Dry adhesive strength (gf/25mm) | Wet adhesive strength (gf/25mm) | Swelling degree (%) of electrochemical device |
|---|---|---|---|---|---|
| Example 1 | 14.0 | 137 | 94 | 20 | 8 |
| Comparative Example 1 | 14.0 | 137 | 60 | 10 | 12 |
| Comparative Example 2 | 13.9 | 140 | 50 | 8 | 13 |

(continued)

| | Thickness (μm) | Air permeability (sec/100cc) | Dry adhesive strength (gf/25mm) | Wet adhesive strength (gf/25mm) | Swelling degree (%) of electrochemical device |
|---|---|---|---|---|---|
| Comparative Example 3 | 13.9 | 140 | 45 | 4 | 14 |
| Comparative Example 4 | 14.0 | 137 | 40 | 2 | 6 |

Referring to Table 1, it was confirmed that in Example 1 according to one embodiment of the present disclosure, the dry adhesive strength and the wet adhesive strength between the negative electrode and the separator were significantly increased and the swelling degree of the electrochemical device was excellent.

In contrast, it was confirmed that in Comparative Examples 1 to 3, since the PAM-based binder was not contained in the negative electrode or the adhesive layer, the adhesive strength between the negative electrode and the separator was quickly reduced compared to Example 1. In addition, it was found that the swelling degree of the electrochemical device was also higher than that of Example 1.

In Comparative Example 4, it was confirmed that graphite rather than the silicon-based negative electrode active material was used as the negative electrode active material, and the negative electrode did not contain the PAM-based binder, and thus the adhesive strength between the negative electrode and the separator was quickly reduced compared to Example 1. However, in Comparative Example 4, it was confirmed that the swelling degree of the electrochemical device was excellent compared to Example 1 as graphite, which does not expand in volume during charging and discharging, was used as the negative electrode active material.

Therefore, since the separator of an electrochemical device according to one embodiment of the present disclosure includes the adhesive layer provided between the silicon-based negative electrode and the coating layer and the silicon-based negative electrode and the adhesive layer each include the polyacrylamide (PAM)-based binder, it is possible to increase the adhesive strength with the silicon-based negative electrode and suppress the swelling of the electrochemical device to which the silicon-based negative electrode is applied, thereby improving the stability of the electrochemical device.

**[Description of reference numerals]**

100: separator for an electrochemical device
110: porous polymer base
130: coating layer
150: adhesive layer

**Claims**

1. A separator for an electrochemical device, comprising an adhesive layer provided to face a silicon-based negative electrode,

   wherein the silicon-based negative electrode includes a silicon-based negative electrode active material and a first polymer binder,
   the adhesive layer includes a second polymer binder, and
   each of the first polymer binder and the second polymer binder is a polyacrylamide-based binder.

2. The separator for an electrochemical device of claim 1, wherein the content of the first polymer binder is 12 parts by weight or less with respect to 100 parts by weight of the silicon-based negative electrode.

3. The separator for an electrochemical device of claim 1, wherein the content of the second polymer binder is 50 parts by weight or less with respect to 100 parts by weight of the adhesive layer.

4. The separator for an electrochemical device of claim 1, wherein the silicon-based negative electrode active material is one or more selected from the group consisting of Si, $SiO_x$, a Si-Y alloy, and Si-C composite, wherein $0<x<2$, and

Y is an alkali metal, an alkaline earth metal, a Group 13 element, a Group 14 element, a transition metal, a rare earth element, or combinations thereof, but is not Si.

5. The separator for an electrochemical device of claim 1, further comprising:

a porous polymer base; and
a coating layer provided on at least one surface of the porous polymer base;
wherein the adhesive layer is provided between the silicon-based negative electrode and the coating layer.

6. The separator for an electrochemical device of claim 5, wherein the coating layer includes inorganic particles and a third polymer binder.

7. The separator for an electrochemical device of claim 6, wherein an average particle diameter D50 of the inorganic particles is in the range of 0.3 $\mu$m or more and 1.0 $\mu$m or less.

8. The separator for an electrochemical device of claim 6, wherein the third polymer binder is an acrylic-based binder, a polyvinylidene-based binder, or a combination thereof.

9. The separator for an electrochemical device of claim 1, wherein a dry adhesive strength of the adhesive layer is 50 gf/25 mm or more.

10. The separator for an electrochemical device of claim 1, wherein a wet adhesive strength of the adhesive layer is in the range of 10 gf/25 mm or more and 30 gf/25 mm or less.

11. An electrochemical device comprising: a positive electrode; a silicon-based negative electrode; and the separator of claim 1 interposed between the positive electrode and the silicon-based negative electrode.

**FIG. 1**

<u>100</u>

<div align="center">

**INTERNATIONAL SEARCH REPORT**

</div>

| | International application No. |
|---|---|
| | **PCT/KR2024/004597** |

### A. CLASSIFICATION OF SUBJECT MATTER

**H01M 50/46**(2021.01)i; **H01M 50/423**(2021.01)i; **H01M 50/42**(2021.01)i; **H01M 50/446**(2021.01)i; **H01M 50/449**(2021.01)i; **H01M 50/426**(2021.01)i; **H01M 50/443**(2021.01)i; **H01M 4/134**(2010.01)i; **H01M 4/48**(2010.01)i; **H01M 10/052**(2010.01)i

According to International Patent Classification (IPC) or to both national classification and IPC

### B. FIELDS SEARCHED

Minimum documentation searched (classification system followed by classification symbols)

H01M 50/46(2021.01); H01M 10/052(2010.01); H01M 10/0525(2010.01); H01M 4/134(2010.01); H01M 4/505(2010.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘계 음극(silicone-based anode), 바인더(binder), 접착층(adhesive layer), 분리막(separator), 폴리아크릴아미드(polyacrylamide), 전기화학 소자(electrochemical device)

### C. DOCUMENTS CONSIDERED TO BE RELEVANT

| Category* | Citation of document, with indication, where appropriate, of the relevant passages | Relevant to claim No. |
|---|---|---|
| A | KR 10-2134424 B1 (LG CHEM, LTD.) 15 July 2020 (2020-07-15)<br>See paragraph [0048]; and claim 1. | 1-11 |
| A | KR 10-2020-0109141 A (LG CHEM, LTD.) 22 September 2020 (2020-09-22)<br>See claims 1 and 12. | 1-11 |
| A | US 2022-0367975 A1 (ENEVATE CORPORATION) 17 November 2022 (2022-11-17)<br>See entire document. | 1-11 |
| A | KR 10-2019-0015105 A (TEIJIN LIMITED) 13 February 2019 (2019-02-13)<br>See entire document. | 1-11 |
| A | KR 10-2020-0139769 A (SHANGHAI ENERGY NEW MATERIALS TECHNOLOGY CO., LTD.) 14 December 2020 (2020-12-14)<br>See entire document. | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **17 July 2024** | **18 July 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| | INTERNATIONAL SEARCH REPORT | International application No. |
|---|---|---|
| | Information on patent family members | **PCT/KR2024/004597** |

| Patent document cited in search report | | | Publication date (day/month/year) | Patent family member(s) | | | Publication date (day/month/year) |
|---|---|---|---|---|---|---|---|
| KR | 10-2134424 | B1 | 15 July 2020 | CN | 108352482 | A | 31 July 2018 |
| | | | | CN | 108352482 | B | 10 September 2021 |
| | | | | EP | 3349270 | A1 | 18 July 2018 |
| | | | | EP | 3349270 | A4 | 22 August 2018 |
| | | | | KR | 10-2017-0055440 | A | 19 May 2017 |
| | | | | US | 10991926 | B2 | 27 April 2021 |
| | | | | US | 2018-0315971 | A1 | 01 November 2018 |
| | | | | WO | 2017-082671 | A1 | 18 May 2017 |
| KR | 10-2020-0109141 | A | 22 September 2020 | CN | 113632260 | A | 09 November 2021 |
| | | | | EP | 3863084 | A1 | 11 August 2021 |
| | | | | EP | 3863084 | A4 | 01 December 2021 |
| | | | | EP | 3863084 | B1 | 01 May 2024 |
| | | | | KR | 10-2564970 | B1 | 09 August 2023 |
| | | | | US | 2022-0013784 | A1 | 13 January 2022 |
| | | | | WO | 2020-185014 | A1 | 17 September 2020 |
| US | 2022-0367975 | A1 | 17 November 2022 | WO | 2022-241096 | A1 | 17 November 2022 |
| KR | 10-2019-0015105 | A | 13 February 2019 | CN | 109390533 | A | 26 February 2019 |
| | | | | JP | 2019-029313 | A | 21 February 2019 |
| | | | | JP | 2019-029314 | A | 21 February 2019 |
| | | | | JP | 2019-029315 | A | 21 February 2019 |
| | | | | JP | 7054996 | B2 | 15 April 2022 |
| | | | | JP | 7054997 | B2 | 15 April 2022 |
| | | | | KR | 10-2612838 | B1 | 13 December 2023 |
| | | | | US | 2019-0044118 | A1 | 07 February 2019 |
| KR | 10-2020-0139769 | A | 14 December 2020 | CN | 108539095 | A | 14 September 2018 |
| | | | | CN | 108539095 | B | 15 June 2021 |
| | | | | EP | 3776691 | A1 | 17 February 2021 |
| | | | | EP | 3776691 | A4 | 16 February 2022 |
| | | | | JP | 2021-520607 | A | 19 August 2021 |
| | | | | JP | 7443241 | B2 | 05 March 2024 |
| | | | | US | 2021-0135315 | A1 | 06 May 2021 |
| | | | | WO | 2019-192474 | A1 | 10 October 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230052786